# EUROPÄISCHE PATENTANMELDUNG

(11) **EP 0 901 190 A2**
(43) Veröffentlichungstag der Anmeldung: **10.03.1999**
(21) Anmeldenummer: 98115676.3
(22) Anmeldetag: 20.08.1998
(51) Int. Cl.: H01R 13/00

(54) **Kabel-Stecker-Durchführsystem**

(30) Priorität: 06.09.1997 DE 29716019 U
(71) Anmelder: Rose-Elektrotechnik GmbH + Co KG Elektrotechnische Fabrik, D-32457 Porta Westfalica (DE)
(72) Erfinder: Schaadt, Dieter B., 32429 Minden (DE); Glenk, Ralf, 32602 Vlotho (DE); Böker, Detlef, 32479 Hille (DE)
(74) Vertreter: Hanewinkel, Lorenz, Dipl.-Phys.

(57) **Zusammenfassung**

Das Kabel-Stecker-Durchführsystem für/an elektrische und/oder elektronische Bauteile aufnehmende Gehäuse weist eine an einer Wandung (5) des Gehäuses im Bereich eines Durchbruches (4) festlegbare Haube (1/20) mit mindestens einem Durchlaß (2/21) für das Kabel (7) mit Stecker (6) und mindestens einen in die Haube (1/20) eingesetzten, mit der Haube (1/20) und der Gehäusewandung (5) einen Pressdruck eingehenden, flexiblen und/oder elastischen Einsatz (8/22) mit mindestens einem zu einem Einsatzrand (8a/22a) geschlitzten Kabel-Einlegeloch (9) auf.

## Beschreibung

Die Erfindung bezieht sich auf ein Kabel-Stecker-Durchführsystem für elektrische und/oder elektronische Bauteile aufnehmende Gehäuse der verschiedensten Art.

Bei den bekannten Steuergehäusen bzw. Steuertafeln wird das Elektrokabel zuerst durch eine in einer Gehäusewandung vorgesehene Kabeleinführung hindurchgeführt und dann der Stecker nach dem Durchführen des Kabels an dem Kabel durch Löten o. dgl. befestigt.

Dieses ist verhältnismäßig umständlich und erfordert nach dem Durchführen des Kabels noch den zusätzlichen Arbeitsgang der Steckerbefestigung.

Weiterhin müssen bei Kabeln mit vorkonfektionierten Steckern die Stecker für die Montage entfernt werden; dieses kann bei vieladrigen Kabeln später einen entsprechenden Lötaufwand nach sich ziehen und durch Manipulationen einen Nachteil auf den Garantieanspruch ergeben.

Aufgabe der Erfindung ist es, ein einfaches und leicht montierbares Durch- und Einlaßsystem für vorkonfektionierte Kabel mit Steckern für Gehäuse zu schaffen.

Diese Aufgabe wird erfindungsgemäß durch die kennzeichnenden Merkmale des Patentanspruches 1 gelöst.

Die sich daran anschließenden Unteransprüche beinhalten Gestaltungsmerkmale, welche vorteilhafte und förderliche Weiterbildungen der Aufgabenlösung darstellen.

Mit der Durchführungskonzeption gemäß der Erfindung kann ein vorkonfektioniertes Kabel mit Stecker, d. h. der Stecker ist bereits an dem Kabel befestigt, in einfacher und leichter Weise in ein Gehäuse mit elektrischen Bauteilen zur elektrischen Verbindung eingeführt werden, so daß spätere Verbindungsarbeiten entfallen.

Hierfür besteht die Kabel-Stecker-Durchführung aus einer ein- oder zweiteiligen Haube mit Steckerdurchlaß und Schraubenlöchern für die Verschraubung im Bereich eines Durchbruches einer Gehäusewandung und einem oder mehreren elastischen Einsätzen aus Gummi, Kunststoff o. dgl., die Durchgangslöcher aufweisen und mit mindestens einem geschlitzten Einlegeloch für das Kabel ausgestattet sind.

Das Kabel wird mit seinem Stecker durch den Steckerdurchlaß in der Haube geführt und dann beim Aufweiten des Einsatzes im Schlitzbereich seitlich in das Einlegeloch eingelegt und danach wird die Haube über den oder die Einsätze gesteckt und durch Schrauben am Gehäuse im Bereich des Durchbruches festgelegt.

Der oder die Einsätze haben ein gewisses Übermaß gegenüber dem Haubeninnenraum, so daß eine günstige Anpress- und Dichtverbindung entsteht.

Der Schlitz zum Einlegeloch im Einsatz wird nach außen hin von der Haube unsichtbar überdeckt.

Die Haube kann einstückig und der Einsatz ebenfalls einstückig mit einem oder mehreren Durchlässen ausgestattet sein. Weiterhin kann die Haube aus zwei identischen Haubenhälften, also nur aus einem Bauteil gebildet werden, in dem die beiden gleichen Haubenhälften auf Umschlag zusammengefügt werden. In diese Haube werden ein oder mehrere Einsätze mit/ohne Einlegeloch durch ineinandergreifende Aussparungen und Vorsprünge in V- und Keilform nach Art einer Verzahnung eingesetzt und lagesicher gehalten, wobei durch den elastischen Werkstoff der Einsätze und deren gewisses Übermaß zum Haubeninnenraum bei der Befestigung der Haube an der Gehäusewand ein Pressdruck zwischen Einsätzen und Haube und Gehäusewand entsteht, was eine abgedichtete Befestigung der Kabel-Stecker-Durchführung am Gehäuse gewährleistet.

Die erfindungsgemäße Kabel-Steckerdurchführung ist äußerst einfach und kostengünstig aufgebaut und läßt sich mit wenigen Handgriffen leicht montieren sowie demontieren.

Auch besteht die Möglichkeit bei dieser Kabeldurchführung in dem/den Einsätzen unterschiedlich große Löcher für verschieden dicke Kabel auszunehmen bzw. einen Einsatz lochlos als Blindstopfen auszubilden.

Auf den Zeichnungen sind Ausführungsbeispiele der Erfindung dargestellt, welche nachfolgend näher erläutert werden. Es zeigt:
- Fig. 1: eine Perspektive einer Haube für ein Kabel-Stecker-Durchführsystem,
- Fig. 2: eine Perspektive eines in die Haube einsetzbaren Einsatzes mit Kabelloch;
- Fig. 3: eine Perspektive der Haube mit eingesetztem Einsatz;
- Fig. 4: einen Längsschnitt durch die an einer Gehäusewand angeschraubten Kabel-Stecker-Durchführung mit eingeführtem Kabel mit Stecker,
- Fig. 5: eine Perspektive eines weiteren Kabel-Stecker-Durchführsystems mit einer aus zwei identischen Hälften zusammengesetzten Haube und mehreren Einsätzen mit Einlegelöchern sowie der Gehäusewand mit Durchbruch,
- Fig. 6: eine perspektivische Innenansicht der beiden identischen zusammenfügbaren Haubenhälften im getrennten Zustand,
- Fig. 7: eine perspektivische Innenansicht der zusammengesetzten Haube und einem noch nicht eingesetzten Einsatz,
- Fig. 8: eine Perspektive in Explosionsdarstellung der Haubenhälften, Einsätze und Schrauben,
- Fig. 9: einen Längsschnitt durch die Haube mit Einsätzen gemäß Schnittlinie I-I in Fig. 8,
- Fig. 10: einen Querschnitt durch die Verbindung der beiden Haubenhälften mittels Befestigungsaugen gemäß Schnittlinie II-II in Fig. 8,
- Fig. 11: einen Querschnitt durch die Haube im Bereich eines aufgenommenen Einsatzes entsprechend Schnittlinie III-III in Fig. 8.

Das Kabel-Stecker-Durchführsystem (die Kabel-Stecker-Durchführung) für/an elektrische und/oder elektronische Bauteile aufnehmende Gehäuse, wie Steuergehäuse, Steuertafeln o. dgl. setzt sich aus einem an einer Wandung (5) des Gehäuses im Bereich eines Durchbruches (4) festlegbaren Haube (1/20) mit mindestens einem Durchlaß (2/21) für das Kabel (7) mit Stecker (6) und mindestens einem in die Haube (2/21) eingesetzten, mit der Haube (2/20) und der Gehäusewandung (5) einen Pressdruck eingehenden, flexiblen und/oder elastischen Einsatz (8/22) mit mindestens einem zu einem Einsatzrand (8a/22a) geschlitzten Einlegeloch (9) zusammen.

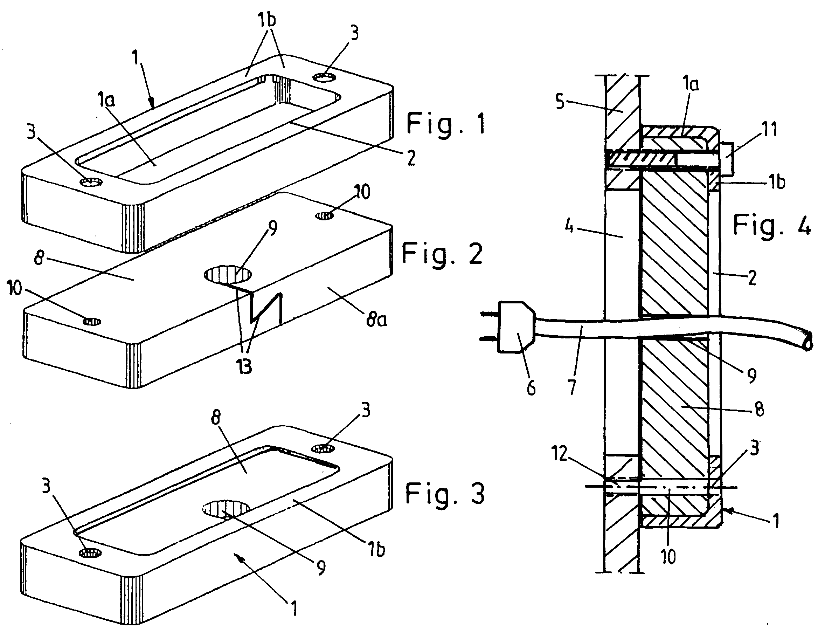

Gemäß der ersten Ausführung nach Fig. 1 bis 4 ist die Haube (1) als Flanschteil einstückig mit einer Rechteck-Raumform ausgebildet und der Einsatz (8) von einem rechteckigen, gegenüber dem Haubeninnenraum (1a) ein Übermaß in der Grundformgröße aufweisenden Einlageblock gebildet.

Der Stecker-Kabel-Durchlaß (2) in der Deckwand (1b) der Haube (1) hat eine Rechteck-Grundform, die einen großen Teil der Deckwandfläche einnimmt, so daß die Deckwand (1b) praktisch als streifenförmiger Rand den Durchlaß (2) umgibt.

In der den Stecker-Kabel-Durchlaß (2) begrenzenden Hauben-Deckwand (1b) ist in den beiden Hauben-Längenendbereichen im Abstand zu dem Stecker-Kabel-Durchlaß (2) je ein Schraubenloch (3) ausgenommen und der blockförmige Einsatz (8) weist zwei kongruente Deckungslöcher (10) für die Befestigungsschrauben (11) auf. Die Befestigungsschrauben (11) werden durch die Löcher (3, 11) gesteckt und in Gewindelöcher (12) der Gehäusewandung (5) eingeschraubt, wobei die Haube (1) einerseits innen umlaufend mit dem Einlageblock (8) eine Pressverbindung eingeht und andererseits mit seiner Hauben-Deckwand (16) den Einlegeblock (8) übergreift und gegen die Gehäusewand (5) abgedichtet hält.

Der Durchbruch (4) in der Gehäusewand (5) ist so groß, daß eine Schraubverbindung (11) der Kabel-Stecker-Durchführung an dem Gehäuse möglich ist; der Durchbruch (4) ist so groß wie der Steckerdurchlaß (2) oder kleiner als derselbe.

Das Kabel-Einlegeloch (9) ist asymmetrisch im Einlageblock (8) auf der gesamten Blockhöhe ausgespart und durch einen eine Schwalbenschwanzanlage bildenden, zum Blockrand (8a) geradlinig und anschließend in Blockhöhe zick-zack-förmig verlaufenden Schlitz (13) einseitig geöffnet; der Schlitz (13) läuft zuerst vom Einlegeloch (9) zum Blockrand (8a) und dann auf dem gesamten Einlegeloch (9) in Zick-Zack-Form senkrecht nach unten, diagonal nach oben und anschließend wieder senkrecht nach unten.

Der Schlitz (13) in dem Einlageblock (8) wird von dem Deckwandrand (1b) der Haube (1) im verbundenen Flansch-Einlegeblockzustand überdeckt.

Zum Einführen des Kabels (7) mit Stecker (6) wird dieses mit dem Stecker (6) voran durch den Steckerdurchlaß (2) des Flansches (1) gesteckt. Dann wird der Einlegeblock (8) im Bereich seines Schlitzes (13) quer zur Block-Längsrichtung aufgeweitet, so daß durch den geöffneten Schlitz (13) das Kabel (7) von der Seite her in das Einlegeloch (9) eingelegt werden kann. Danach wird der Block (8) wieder zusammengedrückt und der Schwalbenschwanzschlitz (13) greift ineinander. Die diagonalen Flächen des Schlitzes (13) ergeben eine Verzahnung, die gegeneinander gepre§t eine erhöhte Halte- und Dichtwirkung auf das Kabel (7) ergeben.

Nach dem Einführen des Kabels (7) wird der Einlegeblock (8) in die flanschartige Haube (1) eingedrückt und mit diesem außen am Gehäuse angeschraubt.

Zum Lösen wird die Verschraubung (11) gelöst, die Haube (1) mit Einlegeblock (8) vom Gehäuse abgenommen, der Einlegeblock (8) aus dem Flansch (1) gelöst und dann kann das Kabel (7) durch Aufweiten des Einlegeblockes (9) im Schlitz (12) aus dem Loch (9) seitlich herausgenommen werden.

Der Einlegeblock (8) läßt sich auch mit mehreren, zu dem jeweiligen Blockrand (8a) geschlitzten Einlegelöchern (9) mit unterschiedlichen Durchmessern für verschieden dicke Kabel (7) ausstatten.

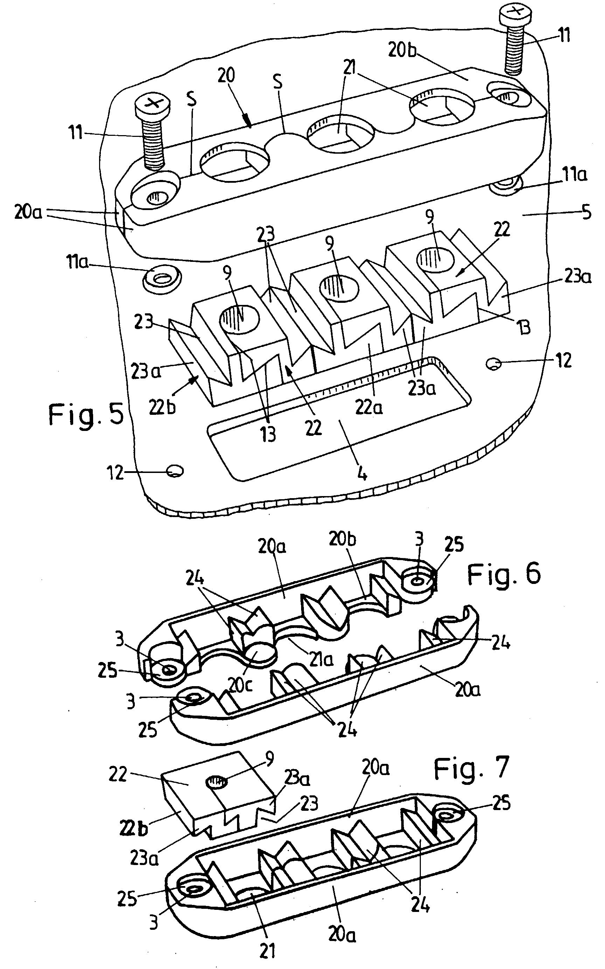

Gemäß der zweiten Ausführung nach Fig. 5 bis 11 ist die Haube (20) zweigeteilt und besteht aus zwei identischen auf Umschlag zu der Haube (20) zusammensetzbaren Haubenhälften (20a) mit mehreren Durchlässen (21) für Kabel (7) mit Stecker (6).

In die Haube (20) sind mehrere Einsätze (22/22A) mit/ohne Kabel-Einlegelöchern (9) einsetzbar.

Die Haube (20) hat eine langgestreckte Rechteckform und die beiden Haubenhälften (20a) sind als Winkelteile ausgebildet und besitzen in ihren beiden Längenenden zusammenfügbare übereinanderliegende, angeformte Befestigungsaugen (22) mit je einem Schrauben-Durchgangsloch (3). Die Haubenhälfte (20a) zeigt mehrere in Reihe im Abstand zueinander in der Hauben-Deckwand (20b) vom Stoßrand (S) der Haubenhälften (20a) ausgenommene, zu den Einlegelöchern (21) zusammenfügbaren Halbkreisaussparungen (21a).

Die Einsätze (22/22A) weisen V-förmige Ausprägungen (23) auf und greifen mindestens nahezu formschlüssig in/und über keilförmige Vorsprünge (24) der Haube (20).

Die Haubenhälfte (20a) weist neben jedem Befestigungsauge (22) einen Keilvorsprung (24) und zwischen zwei benachbarten Halbkreisaussparungen (21a) je ein Keilvorsprungspaar (24) auf, welches ein Aufnahmeprisma für je eine keilförmige Ausprägung (23) zweier benachbarter Einsätze (22) bildet.

Die Hauben-Deckwand (20b) ist im Bereich der Keilvorsprungspaare (24) zum überlappenden Zusammenfügen auf Umschlag der beiden identischen Haubenhälften (20a) abgestuft zurück- und vorgesetzt ausgebildet; hierbei zeigt die Hauben-Deckwand (20b) ein über ein Prismapaar (24) in Deck-Wandebene hinausstehendes Wandteil (20c) und beim benachbarten Prismapaar (24) ist die Deckwand (20b) über dem Prismapaar (24) zurückversetzt, praktisch mit einer Aussparung (20b) versehen, in die das hinausstehende Wandteil (20c) formschlüssig eingreift.

Das Wandteil (20c) und die Aussparung (20d) haben eine Kreisform.

Die Einsätze (22/22A) haben eine rechteckige oder quadratische Blockform, besitzen an zwei sich gegenüberliegenden Blockseiten (22b) je eine V-förmige, über die gesamte Blockseiten-Länge verlaufende, und einen Einsatzkeil (23a) bildende Ausprägung (23) und in der Blockmitte liegt das Einlegeloch (9), von dem zu einer quer zu den Ausprägungen (23) verlaufenden Blockseite (22a) ein zick-zack-förmig verlaufender, das Einlegeloch (9) seitlich öffnender, Schlitz (13) abgeht.

Der Schlitz (13) entspricht im Aufbau und in der Funktion dem Schlitz (13) gemäß Einsatz (8) in Fig. 2.

Der blockförmige Einsatz (22) ist zur Bildung der keilförmigen Ausprägung (23) an der Blockseite durch eine V-artige Aussparung ausgenommen und hat dabei einen T-artigen Querschnitt mit hinterschnittenen T-Schenkeln erhalten, die über die keilförmigen Vorsprünge (24) formschlüssig Passen.

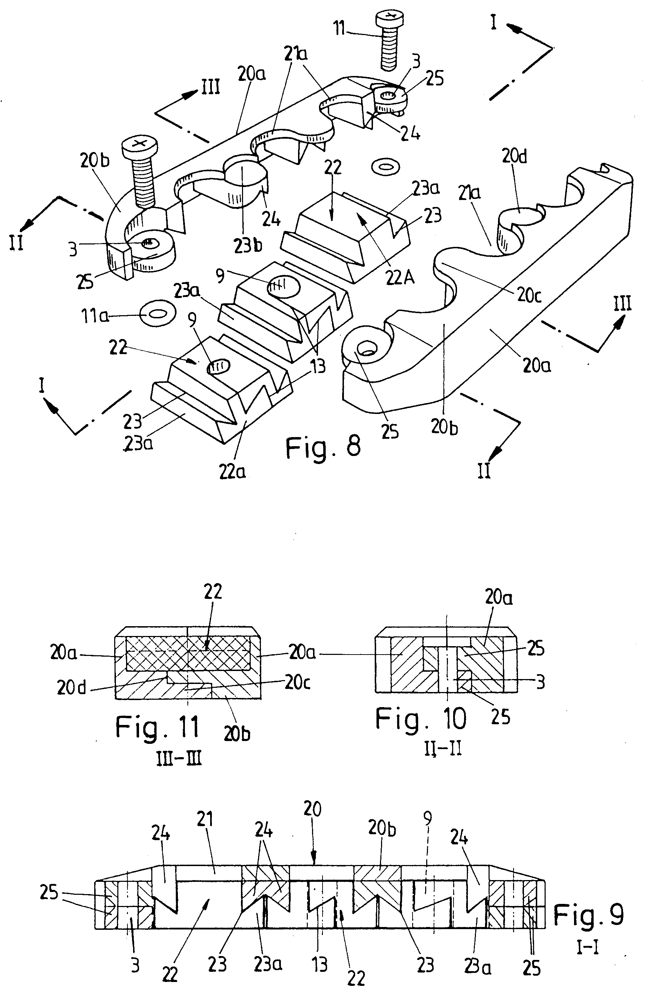

Der blockförmige Einsatz (22) mit V-förmigen Ausprägungen (23) läßt sich auch als einlegelochloser Blindstopfen (22A) gemäß Fig. 8 ausführen, so daß er bei nicht erfolgender Kabeldurchführung eine Abdichtung zwischen Haube (20) und Gehäusewand (5) ergibt.

Der/die Einsätze (20/20A) bestehen aus Gummi oder Kunststoff und die einstückige Haube (20) bzw. die beiden Haubenhälften (20a) sind jeweils einstückig aus Kunststoff oder Metall hergestellt.

Es besteht auch die Möglichkeit, die Einsätze (20) zu einem gemeinsamen Block zusammenzufassen, also als einstückiges Mehrblockteil auszuführen.

Weiterhin kann die Haubendeckwand (20b) zur Bildung der Durchlässe (21) mit vorgeprägten, ausbrechbaren Wandteilen ausgestattet sein.

Zum Einführen der Kabel (7) wird das Einlegeloch (9) in dem jeweiligen Einsatz (22) durch Auseinanderziehen des Schlitzes (13) geöffnet, das Kabel (7) durch den aufgeweiteten Schlitz (13) in das Loch (9) eingelegt und dann der Zick-Zack-Schlitz (13) wieder zusammengefügt (geschlossen).

Dann wird der Einsatz (20) mit Kabel (7) und daran befindlichem Stecker (6) in eine erste Haubenhälfte (20a) eingesetzt, wobei die V-Ausprägungen (23) über die Keilvorsprünge (24) dieser Hälfte (20a) greifen. Nun wird die zweite gleiche Hälfte (20a) um 180° in der Hälftenlage gewendet gegen die erste Hälfte (20a) gesetzt, greift dabei mit ihren in der Trennfuge zusammenstoßenden Keilvorsprüngen (24), die dann jeweils einen über die innere Hohlraumbreite der Haube (20) durchgehenden Keilvorsprung (24) bilden, über die Ausprägungen (23) und mit ihren Befestigungsaugen (22) übereinander sowie mit ihrem Wandteil (20c) und der Aussparung (20d) ineinander, so daß die Haube (20) geschlossen ist und der/die Einsätze in der Haube (20) liegen.

Nun wird die Haube (20) an der Gehäusewand (5) durch die die koaxial zueinanderliegenden Löcher (3) der Befestigungsaugen (22) durchgreifenden und in die Gewindelöcher (12) des Gehäuses einfassenden Schrauben (11) mit Unterlegscheiben (11a) an der Gehäusewand (5) befestigt, wobei das/die Kabel (7) mit Stecker (6) durch den Durchbruch (4) in das Gehäuse hineingeführt oder aus demselben herausgeführt sind.

Die V-Ausprägungen (23) und Keilvorsprünge (24) der Einsätze (22) und der Haubenhälften (20a) fassen als Verzahnung ineinander. Da die Einsätze (22) mit gewissem Übermaß in die beiden Haubenhälften (20a) eingesetzt werden, erfolgt die Verpressung der Einsätze (22) in der Haube (20) und an der Gehäusewand (5) und sämtliche Anlageflächen und Schlitze werden abgedichtet geschlossen.

In bevorzugter Weise ist die Haube (20) mit drei Einlässen (21) mit kreisförmiger Lochform ausgestattet, wobei diese Einlässe (21) gleich und/oder unterschiedlich große Durchmesser haben können.

Die Einlegelöcher (9) in den Einsätzen (22) können für unterschiedlich dicke Kabel (7) auch unterschiedlich groß im Durchmesser sein.

## Patentansprüche

1. Kabel-Stecker-Durchführsystem für/an elektrische und/oder elektronische Bauteile aufnehmende Gehäuse,
gekennzeichnet durch eine an einer Wandung (5) des Gehäuses im Bereich eines Durchbruches (4) festlegbare Haube (1/20) mit mindestens einem Durchlaß (2/21) für das Kabel (7) mit Stecker (6) und mindestens einen in die Haube (1/20) eingesetzten, mit der Haube (1/20) und der Gehäusewandung (5) einen Pressdruck eingehenden, flexiblen und/oder elastischen Einsatz (8/22) mit mindestens einem zu einem Einsatzrand (8a/22a) geschlitzten Kabel-Einlegeloch (9).

2. Kabel-Stecker-Durchführsystem nach Anspruch 1, dadurch gekennzeichnet, daß die Haube (1) einstückig mit einer Rechteck-Raumform ausgebildet und der Einsatz (8) von einem rechteckigen, gegenüber dem Haubeninnenraum (1a) ein Übermaß in der Grundformgröße aufweisenden Einlegeblock gebildet ist.

3. Kabel-Stecker-Durchführsystem nach Anspruch 1 oder 2, dadurch gekennzeichnet, daß der Stecker-Kabel-Durchlaß (2) in der Deckwand (1b) der Haube (1) eine Rechteck-Grundform hat.

4. Kabel-Stecker-Durchführsystem nach einem der Ansprüche 1 bis 3, dadurch gekennzeichnet, daß in der den Stecker-Kabel-Durchlaß (2) begrenzenden Hauben-Deckwand (1b) in den beiden Hauben-Längenendbereichen im Abstand zu dem Stecker-Kabel-Durchlaß (2) je ein Schraubenloch (3) ausgenommen ist und der Einlageblock (8) zwei kongruente Durchgangslöcher (10) für Befestigungsschrauben (11) aufweist.

5. Kabel-Stecker-Durchführsystem nach einem der Ansprüche 1 bis 4, dadurch gekennzeichnet, daß das Kabel-Einlegeloch (9) asymmetrisch im Einlageblock (8) ausgespart und durch einen eine Schwalbenschwanzanlage bildenden, zum Blockrand (8a) geradlinig und anschließend in Blockhöhe zick-zack-förmig verlaufenden Schlitz (13) einseitig geöffnet ist.

6. Kabel-Stecker-Durchführsystem nach einem der Ansprüche 1 bis 5, dadurch gekennzeichnet, daß der Schlitz (13) des Einlageblockes (8) von dem Rand der Haubenwand (1b) der Haube (1) überdeckt ist.

7. Kabel-Stecker-Durchführsystem nach Anspruch 1, dadurch gekennzeichnet, daß die Haube (20) zweigeteilt ist und aus zwei identischen auf Umschlag zu der Haube (20) zusammensetzbaren Haubenhälften (20a) mit mehreren Durchlässen (21) für Kabel (7) mit Stecker (6) besteht und in die Haube (20) mehrere Einsätze (22) mit/ohne Kabel-Einlegelöchern (9) einsetzbar sind.

8. Kabel-Stecker-Durchführsystem nach Anspruch 7, dadurch gekennzeichnet, daß die Haube (20) eine langgestreckte Rechteckform hat und die beiden Haubenhälften als Winkelteile in ihren beiden Längenenden zusammenfügbare übereinanderliegende, angeformte Befestigungsaugen (22) mit je einem Schrauben-Durchgangsloch (3) besitzt und mehrere in Reihe im Abstand zueinander in der Hauben-Deckwand (20b) vom Stoßrand (S) der Haubenhälften (20a) ausgenommene, zu den Einlegelöchern (21) zusammenfügbare Halbkreisaussparungen (21a) aufweist.

9. Kabel-Stecker-Durchführsystem nach Anspruch 7 oder 8, dadurch gekennzeichnet, daß die Einsätze (22) mit ausgeformten V-förmigen Ausprägungen (23) in/und über keilförmige Vorsprünge (24) der Haube (20) mindestens nahezu formschlüssig greifen.

10. Kabel-Stecker-Durchführsystem nach einem der Ansprüche 7 bis 9, dadurch gekennzeichnet, daß die Haubenhälfte (20a) neben jedem Befestigungsauge (22) einen angeformten Keilvorsprung (24) und zwischen zwei benachbarten Halbkreisaussparungen (21a) je ein angeformtes Keilvorsprungspaar (24) in Prismaform aufweist und die Hauben-Deckwand (20b) im Bereich der Keilvorsprungspaare (24) zum überlappenden, formschlüssigen Zusammenfügen auf Umschlag der beiden identischen Haubenhälften (22a) vorgesetzte Wandteile (20c) und zurückgesetzte Aussparungen (20d) hat.

11. Kabel-Stecker-Durchführsystem nach einem der Ansprüche 1 bis 10, dadurch gekennzeichnet, daß die Einsätze (22) eine rechteckige oder quadratische Blockform haben, an zwei sich gegenüberliegenden Blockseiten je eine V-förmige, über die gesamte Blockseitenlänge verlaufende und einen Einsatzkeil (23a) bildende Ausprägung (23) aufweisen und in der Blockmitte das Einlegeloch (9) liegt, von dem zu einer quer zu den Ausprägungen (23) -Einsatzkeilen (23a)- verlaufenden Blockseite (22a) ein zick-zack-förmig verlaufender, das Einlegeloch (9) seitlich öffnender Schlitz (13) abgeht.

12. Kabel-Stecker-Durchführsystem nach einem der Ansprüche 7 bis 11, dadurch gekennzeichnet, daß der blockförmige Einsatz (22) mit V-förmigen Ausprägungen (23) als einlegelochloser Blindstopfen (22A) ausgebildet ist.

13. Kabel-Stecker-Durchführsystem nach einem der Ansprüche 1 bis 12, dadurch gekennzeichnet, daß der/die Einsätze (8/22) aus Gummi oder Kunststoff bestehen und die einstückige Haube (1) bzw. die beiden Haubenhälften (20a) jeweils einstückig aus Kunststoff oder Metall hergestellt sind.
